# EUROPEAN PATENT APPLICATION

(11) **EP 1 191 471 A1**
(43) Date of publication of application: **27.03.2002**
(21) Application number: 01307627.8
(22) Date of filing: 07.09.2001
(51) Int. Cl.: G06F 17/60

(54) **Web based document preparation assistant**

(30) Priority: 20.09.2000 US 665851
(71) Applicant: NCR INTERNATIONAL INC., Dayton, Ohio 45479 (US)
(72) Inventor: Simmons, David G., Waterloo, Ontario N2T 2L3 (CA)
(74) Representative: Williamson, Brian

(57) **Abstract**

A deposit preparation system comprising a bank computer which communicates with a plurality of depositor computers is described. A depositor prepares deposit information by entering information about each of a plurality of items to be deposited, using the depositor computer. The information provided for each item includes the amount of the item, in addition to other information to be used to reconcile discrepancies. Further additional information may be optionally provided by the depositor, to be used by the depositor in identifying a transaction to which the item relates. The deposit information is then transmitted to the bank computer, which associates the deposit information with a deposit identification code, provides the code to the depositor and stores the deposit information in a database. When the depositor submits the deposit, he or she provides the deposit identification code in order to associate the items actually deposited with the deposit information previously submitted.

## Description

The present invention relates generally to improvements to bank deposit processing systems. More particularly, the invention relates to advantageous methods and apparatus for using a computer network such as the Internet for use in receiving depositor entered information relating to a deposit transaction for use in reconciling the transaction.

A bank depositor typically submits a deposit to the bank by physically presenting items to be deposited along with an itemized listing of the items. The listing includes the amount of each individual item as well as a total sum representing the sum of the amounts of all the items. For depositors who typically present deposits comprising large numbers of items, for example, merchants, the listing of items typically comprises an adding machine tape which is presented along with the items and a deposit document showing the total of the items. When the bank processes the deposit, it identifies any discrepancy between the total shown on the deposit document and the total of the items presented, and makes an adjustment to the deposit amount. The bank also uses the adding machine tape in an attempt to identify which individual item or items is responsible for the discrepancy. Typically, the bank captures an image of the adding machine tape which can then be retrieved if the deposit must be examined for discrepancies. Discrepancies may typically include missing items. For example, a depositor adds an item for $20 into the addition to find the deposit total, and then carries the total to the deposit document, but then fails to actually submit the item because it falls out of a stack of checks being prepared for deposit. Alternatively, a discrepancy may be caused by an incorrect entry of the amount of an item into the depositor's calculations. For example, a depositor may inadvertently enter an amount of $25 when an item is really for $15. This will cause a discrepancy of $10 when the deposit is processed.

When a discrepancy occurs, the bank takes the adding machine tape and compares it against the amounts which were recognized for the items constituting the deposit. If the reason for the discrepancy can be identified, this information can be passed along to the depositor, making it easier for the depositor to identify and correct the error. For example, a deposit consists of 31 items of differing amounts and the adding machine tape may list 32 items. If one of the amounts listed on the adding machine tape is an amount of $32.63 and if no item for $32.63 was actually received, the bank can notify the depositor that an item for $32.63 appears to be missing from the deposit. If the items in a deposit are submitted in the same order in which they appear on the adding machine tape, for example, a first item for $5.63, three more items for $6.00 and a fifth item for $4.63, this makes it easier to identify discrepancies in amount. For example, if the adding machine tape lists a first item for $5.63, a second item for $7.00, two more items for $6.00 and a fifth item for $4.63, the bank can notify the depositor that the second item appears to have been incorrectly entered.

Several drawbacks are associated with the practice of submitting an itemized paper list in order to assist in reconciling discrepancies in deposits. First, it is difficult to perform optical character recognition on an adding machine tape. This difficulty arises because adding machine tapes may vary widely in paper quality from one to another, and because print quality and darkness may also vary widely from one tape to another. Trying to perform optical character recognition on such a tape presents a danger of introducing errors caused by the character recognition process, rendering the captured information useless or worse than useless in detecting discrepancies. Because of these difficulties, adding machine tapes are typically not subjected to optical character recognition and therefore the information on the tape is usually not captured in machine readable form. Instead, the tape itself, or a captured image of the tape, is manually examined, requiring considerable labor and resulting expense.

In addition, an adding machine tape typically does not include any provision for adding identifying information about an entry. The adding machine tape typically submitted with a deposit simply includes a list of amounts and a total. There is nothing on the tape tying a particular entry to a specific transaction. This information could prove very valuable to a depositor if available, particularly if an item is returned for insufficient funds, because a stop order is in place, or for some other reason. The depositor can identify the maker of the item, but may not be able to identify the particular transaction to which the item relates because that information will not necessarily appear on the item or in the materials accompanying the deposit. If a depositor has received a number of checks from the same party, one of which is returned, identifying the maker of the check is by itself insufficient to identify the transaction. Particularly in the case of a stop order in which a customer of long standing stopped a check to the depositor because of dissatisfaction with the product or service provided by the depositor, it may be extremely valuable for a depositor to identify the transaction to which the stopped item relates, so that the depositor can investigate the transaction and, if appropriate, make concessions in order to satisfy the customer who issued the item. In a more typical case in which an item is returned unpaid because of insufficient funds, identifying the affected transaction simplifies the depositor's internal bookkeeping and assists in preparing to contact the customer in order to seek payment of the dishonored item.

There exists, therefore, a need for a system which will allow a depositor to submit itemized deposit information to a bank in electronic form, and which allows the depositor to enter additional information identifying a transaction to which an item relates.

According to a first aspect of the present invention there is provided a deposit preparation system, comprising:
a bank computer;
a database operative to receive and store information received from the bank computer and to retrieve and supply information to the bank computer;
a plurality of depositor computers operative to establish a connection with the bank computer, each depositor computer being able to receive deposit information from a depositor, the deposit information reflecting information about each of a plurality if items to be submitted for deposit, the depositor computers being operative to transmit the deposit information to the bank computer for storage in the database;
a deposit station for receiving a deposit comprising a plurality of deposited items and for associating the deposit with previously submitted deposit information; and
a processing center for processing a deposit comprising a plurality of deposited items, the processing center being operative to receive the deposit information and employ the deposit information to identify discrepancies between the deposit and the deposit information.

According to a second aspect of the present invention there is provided a method of deposit preparation, comprising the steps of:
establishing a connection between a bank computer and a depositor computer;
receiving an item information entry for each of a plurality of items for temporary storage in the depositor computer; and
assembling the item information entries into deposit information; and
transmitting the deposit information to the bank computer.

A deposit preparation system according to the present invention includes a bank computer communicating with a plurality of depositor computers. When a depositor wishes to prepare a deposit, he or she establishes a connection between the depositor computer and the bank computer and provides authentication information. The bank computer then transmits a deposit entry form to the depositor computer, allowing the depositor to assemble deposit information to be transmitted to the bank computer by submitting information about each item making up the deposit. The information includes the amount of the item, and may also include information such as a transaction identifier, the maker and date of the item, or other information useful in the internal bookkeeping of the depositor. During the process of assembling the deposit information, the depositor may edit or delete information about an item, until the deposit information is assembled and submitted. Upon submission of the deposit information, the deposit information is transmitted to the bank computer and stored in a database. A deposit identification code is generated and supplied to the depositor for use in retrieving the deposit information.

When the depositor submits the deposited items for which information was previously submitted, he or she also supplies the deposit identification code. The deposit information code is associated with the deposited items, and information about the deposited items as actually submitted is stored in the database along with the deposit identification code. When the deposited items are processed, any discrepancies between the actual deposited items and the previously submitted deposit information are identified. The depositor is notified that a discrepancy exists, and informed of the amount of the discrepancy. In addition, the previously submitted deposit information is examined and used to identify the item or items responsible for the discrepancy. If the item responsible for the discrepancy is identified, this information is furnished to the depositor along with all previously submitted information about the item, for use by the depositor in identifying the item and relating the item to a transaction. Similarly, if an item is returned, the deposit information relating to the deposit of which the item was a part is retrieved and the previously submitted information relating to the item is furnished to the depositor at the same time the depositor is notified that the item was returned.

An embodiment of the present invention will now be described, by way of example, with reference to the accompanying drawings, in which:
Fig. 1 illustrates a system for deposit preparation and reconciliation according to the present invention;
Fig. 2 illustrates a process of deposit preparation according to the present invention;
Fig. 3 illustrates an initial login form according to the present invention;
Fig. 4 illustrates an exemplary deposit preparation form according to the present invention;
Fig. 5 illustrates an exemplary depositor's deposit information display according to the present invention;
Fig. 6 illustrates a process of deposit reconciliation according to the present invention; and
Fig. 7 illustrates an exemplary bank deposit information display according to the present invention.

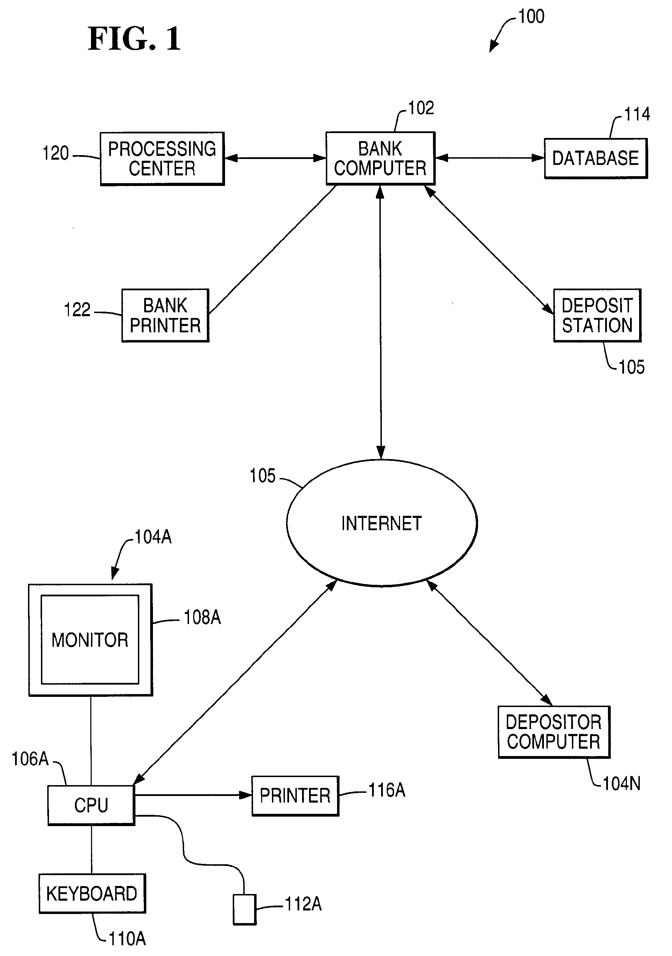

Fig. 1 illustrates a system 100 for deposit preparation according to the present invention. The system 100 includes a bank computer 102 adapted to communicate with a plurality of depositor computers 104A...104N through any of a number of communication media or connections. In the exemplary embodiment illustrated in Fig. 1, an Internet connection 105 is shown as this communication medium. A direct dial phone connection, a dedicated line, wireless or other connection might also be employed. The Internet has the advantages of being widely available and likely to be accessible to and regularly used by the typical depositor. The Internet connection 105 can provide adequate communication security if commonly used security procedures such as public key cryptography are employed. For the sake of simplicity, only the operations of a single depositor computer 104A will be discussed here, but each of the depositor computers 104A...104N may suitably operate in a similar way or be adapted as desired according to the needs of different depositors. The depositor computer 104A is shown here as including a CPU 106A, monitor 108A, keyboard 110A and mouse 112A. It will be recognized that the other depositor computers may include similar components. The bank computer 102 may include or communicate with a deposit information database 114 for storage of deposit information submitted using the depositor computer 104A.

When a depositor wishes to prepare a deposit, he or she establishes a connection between the depositor computer 104A and the bank computer 102, preferably employing an authentication procedure such as submission of a predetermined username and password. The bank computer 102 then presents the depositor with the option to select deposit preparation. The option to select deposit preparation may suitably be presented to the depositor as a click and select icon on a web page allowing the depositor to choose from one of a plurality of other options such as various account maintenance function such as account history review or balance review. The options are preferably presented in a display sent to the depositor computer 104A. The display may suitably be in the form of an .html page for display by a web browser using the display 106A.

Once the depositor has chosen to prepare a deposit, the bank computer 102 sends a deposit preparation form to the depositor computer 104A. The deposit preparation form includes a field for the amount of each item, as well as an additional field or fields for each item which the depositor may use to enter additional information identifying the item. The deposit preparation form may suitably include a java applet so that the depositor can enter each item in the same space on the form and then press a button for entry of the item, causing the item information to be entered in temporary storage and clearing the space for entry of the next item. Once all items in the deposit are entered to the satisfaction of the depositor, the depositor presses a button to submit the deposit information. The depositor computer 104A then transmits the deposit information to the bank computer 102. The bank computer 102 associates the deposit information with an identifying number or code and stores the deposit information in the database 114 along with the identifying number or code. The bank computer 102 then transmits the identifying code back to the depositor computer 104A, allowing the depositor to copy the identifying code or optionally to print the code using a printer 116A connected to the depositor computer 104A. The depositor may also elect to print a barcode representing the identifying code for later submission with the deposit.

After the depositor has prepared the deposit, he or she submits the deposited items to a deposit station 118 operated by the bank at a convenient time, at the same time furnishing the identifying code with the deposit. The deposit station 118 furnishes the identifying code to the bank computer 102 which associates the identifying code with the deposit for use in retrieving the deposit information from the database 106 when needed in processing the deposit. During the clearing process in which the deposited items are submitted to a processing center 120 for posting to the depositor's account in preparation for submission of the items for payment, the identifying code is used to retrieve the deposit information. The deposit information is compared against the actual items deposited and the total of the deposit as reflected in the deposit information is compared with the total of the items deposited in order to identify whether or not a discrepancy is present.

When a discrepancy is identified, the deposit information and the amounts of the items deposited are examined to attempt to determine the item or items responsible for the discrepancy. The depositor is notified that a discrepancy exists and, if the item responsible for the discrepancy has been identified, the depositor is told which item is responsible for the discrepancy. In addition, any additional information about the item which was submitted by the depositor during deposit preparation is provided to the depositor. This may be done by preparing a report to be mailed to the depositor using a bank printer 122 connected to the bank computer 102. Any of a number of alternative methods may be used, including saving a message in an online account established for the depositor, accessible using the depositor computer 104A, automatic email to the depositor, or any of a number of other methods. Upon being notified of a discrepancy, the depositor may establish a connection to the bank computer 102 using the depositor computer 104A and enter the deposit identification code in order to examine the deposit information and review the discrepancy. By connecting to the bank computer 102, the depositor is able to quickly and easily obtain deposit information relating to the discrepancy, making it easier to follow up on the item responsible for the discrepancy by such procedures as reviewing internal accounts or, in the case of a returned item, contacting the customer who issued the item.

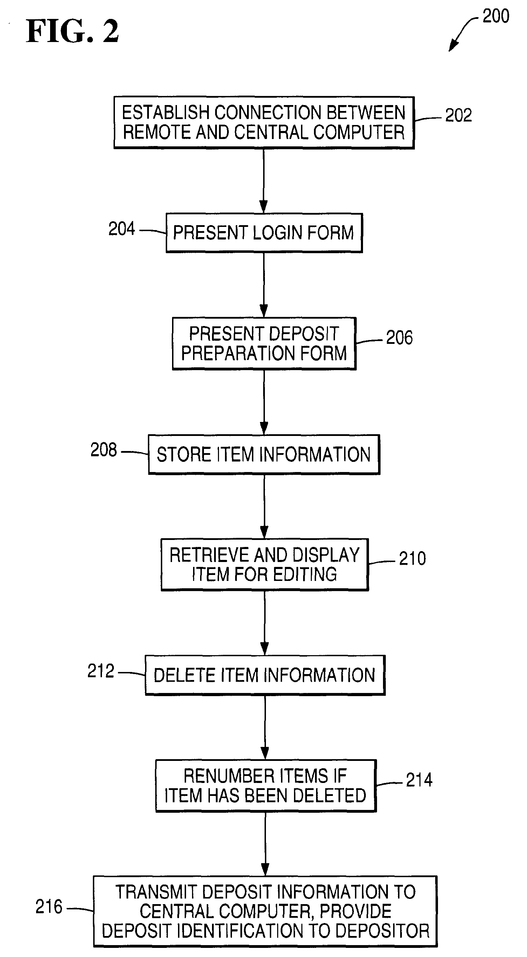

Fig. 2 illustrates a process for deposit preparation 200 according to the present invention. At step 202, a connection is established between a remote computer operated by a depositor and a central computer operated by a bank at which the depositor has an account. At step 204, the depositor is presented with a login form allowing the depositor to enter identifying information. At step 206, in response to an entry of login information by the depositor, the depositor is presented with a deposit preparation form, providing the depositor with the opportunity to enter information for each of a plurality of deposited items. The depositor is also presented with the choice to edit or delete already entered items or to submit the deposit information for the entire deposit. For each item, the information includes the amount of the item and may also include additional information useful for identifying the item. This information may include the American Banking Association (ABA) number of the item, the maker of the item, the date of the item, and additional information used by the depositor in the depositor's own internal bookkeeping, such as a transaction identification code, customer account number or other information. It will be recognized that more or less information may be entered by the depositor, consistent with his or her own needs or the needs of the business. Entry of information about an item is optional, except for the amount of the item.

At step 208, in response to the depositor's command to submit the item information, the item information is temporarily stored and the item is assigned an item number which is displayed to the depositor.

At step 210, in response to a depositor's entry of an item number for an already entered item and selection to edit the item, the item information for the item whose number was entered is retrieved and displayed. The depositor is free to make changes to any of the item information and resubmit the item.

At step 212, in response to a depositor's entry of an item number and selection to delete an item, all information for the item whose number was entered is deleted and the item number is marked for removal. However, at this point the item number is not removed. The reason that the item number is not removed is to allow the other previously entered items to retain the same numbering they received when originally entered by the depositor, so that the depositor can edit or delete those items without needing to adjust the numbering which he or she enters. It should be noted that steps 210 and 212 are optional, and that steps 208-212 need not be performed sequentially but may be performed in any order, in response to selections by the depositor.

At step 214, in response to a depositor's selection to submit a deposit, the previously entered deposit information is examined to determine if any items have been deleted, and if items have been deleted, item numbering is adjusted so that all items are consecutively numbered. Next, at step 216, the deposit information is then transmitted to a bank computer, where it is assigned a deposit identification code and stored. The deposit identification code is also presented to the depositor for use in identifying the deposit information which was submitted, and for presentation to the bank when the deposit is made, so that the bank will be able to retrieve the deposit information. The depositor is given a choice of receiving only the deposit identification code, the deposit identification code accompanied by a barcode, or the deposit identification code with or without a barcode along with the accompanying deposit information in scrollable or printable format. The depositor is also given the opportunity to format the deposit information in the form of a deposit slip, which may be printed and submitted with the deposited items.

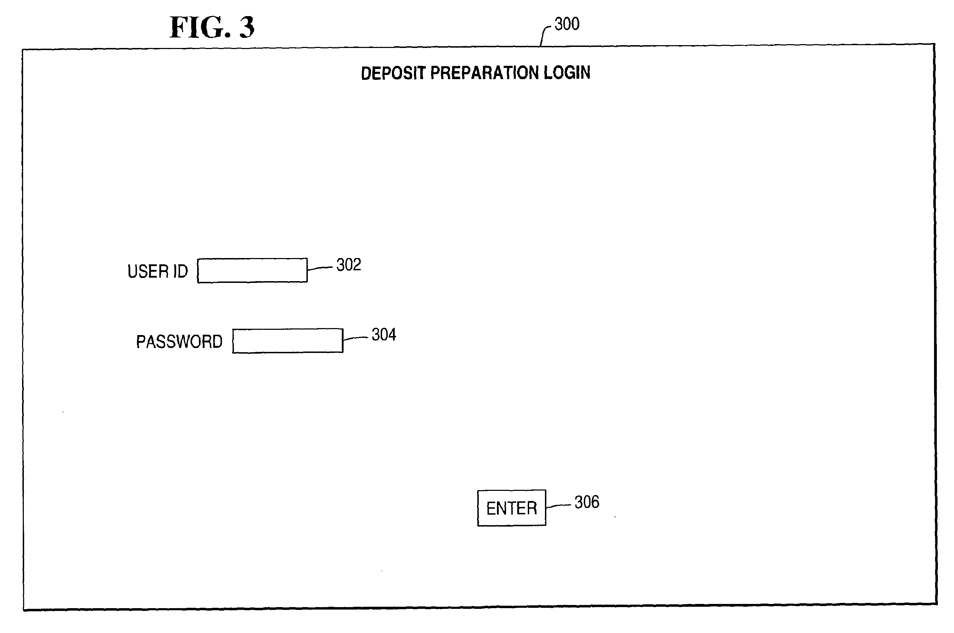

Fig 3 illustrates an exemplary deposit preparation login form 300 according to the present invention. The form 300 may suitably be an .html page displayed on a depositor computer such as the computer 104A of Fig. 1. The form 300 includes a user ID field 302 and password field 304 for entry of a depositor's preassigned user ID and password, respectively. The form 300 also includes an ENTER button 306 which allows submission of the user ID and password to a bank computer such as the computer 106 of Fig. 1.

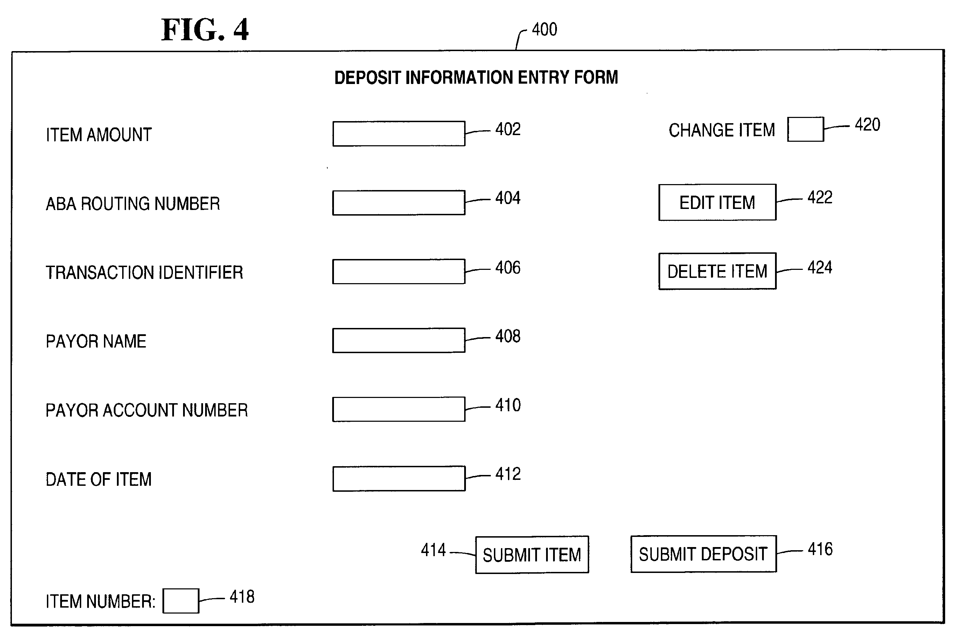

Fig. 4 illustrates an exemplary deposit information entry form 400 according to the present invention. The form 400 may suitably be an .html page displayed on a monitor of a depositor computer such as the monitor 108A of the computer 104A of Fig. 1. The form 400 includes fields 402-412 to allow the depositor to enter data identifying an item. The fields include field 402 for the amount of the item, field 404 for the ABA routing number of an item, field 406 for a transaction identifier used in the depositor's internal bookkeeping processes for identification of a transaction, field 408 for the payor name, field 410 for the payor's account number with the depositor, and field 412 for the date of the item. The form 400 also includes a Submit Item button 414 to allow the depositor to submit item information for temporary storage, and a Submit Deposit button 416 to submit the deposit information to a bank computer such as the computer 106 of Fig. 1 by pointing to and clicking on the Submit Deposit button 416. Once the depositor has pressed the submit item button 414, an item number appears in the Item Number field 418, assigning a consecutive number to the submitted item.

The form 400 also allows the depositor to change or delete an item after an item has been submitted but before the deposit information has been submitted. This may occur, for example, during a review of the physical paperwork associated with the deposit being prepared, for instance if the depositor discovers that he or she has made a mistake in entering details from an item. If the depositor wishes to make changes to an item after the item has been submitted but before the deposit information has been submitted, the depositor enters the item number into the Change Item Number field 420 and presses the Edit Item button 422. The previously entered data from that item appears in the fields 402-412, allowing the depositor to make changes to the data. After any desired changes are made, the depositor presses the Submit Item button 414 to submit the changes. If it is desired to delete all data for an item, the depositor can simply enter the item number into the Change Item Number field 420 and press the Delete Item button 424. All data for the item is then automatically deleted. However, the item numbering remains unchanged until the deposit information is submitted. For example, if item 15 of 25 items is deleted, the items numbered 16-25 retain their original numbering. This is done so that the depositor can identify other items among the items 16-25 for change or deletion without undue confusion. If the depositor wishes to change the item originally numbered 17, for example, he or she can simply enter the number "17" in the Change Item Number field 420, without having to remember to adjust the item number to reflect the deleted item. However, when the deposit is submitted, the numbering for the items originally numbered 16-25 is adjusted so that item 16 becomes item 15, item 17 becomes item 16 and so on. This prevents gaps in the item numbering.

Once the depositor has pressed the Submit Deposit button 416, the deposit information is assigned an identification number and transmitted to a bank computer such as the computer 102 of Fig. 1. A subsequent screen is displayed, showing the identification number and giving the depositor an option to print the identification number or a barcode representing the identification number. If desired, the item information may also be displayed.

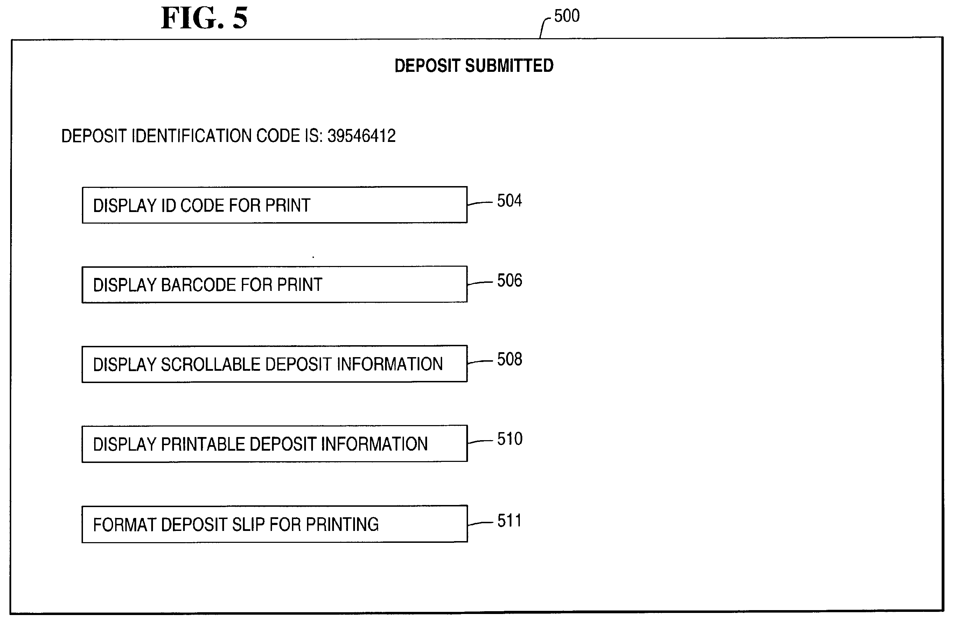

Fig. 5 illustrates a display screen 500 which may suitably presented after a depositor has submitted a deposit. The display screen 500 may suitably comprise an .html or web page for display utilizing a web browser. The display screen 500 preferably includes a deposit identification code 502 as well as buttons for choosing various display options, such as a "display identification code for print" button 504, a "display barcode for print" button 506, a "display scrollable deposit information" button 508, a "display deposit information for printing" button 510 and a "format deposit slip for printing" button 511. Pressing one of buttons 504 through 511 presents the identification code, the identification code accompanied by barcode, the deposit information in scrollable format, the deposit information in printable format or deposit information formatted for printing as a deposit slip, respectively. Information presented in printable format may conveniently be printed using a browser's "print" feature.

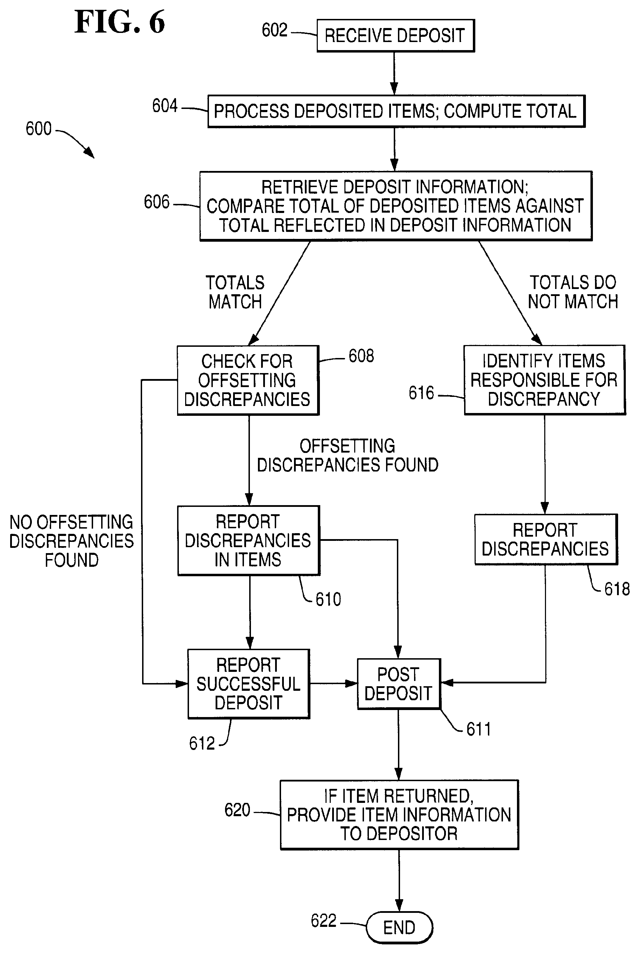

Fig. 6 illustrates a process of deposit reconciliation 600 according to the present invention. The process 600 may suitably take place after deposit information has been submitted using the process of Fig. 2. At step 602, a deposit is received consisting of a collection of items for which information has previously been submitted using the process of Fig. 2. At the same time as the deposit is received, a previously generated deposit identification code is also preferably received. At step 604, the deposited items are processed and the total of the deposited items is computed. At step 606, the deposit identification code is used to retrieve the previously submitted deposit information and the total of the deposited items is compared against the total reflected in the deposit information. If the totals match, the process proceeds to step 608 and the deposited items are checked against the deposit information in order to determine if offsetting discrepancies exist. For example, the deposit information may include offsetting digit transposition errors, reflecting a first item for $14.15 and a second item for $17.87, when the items actually deposited include an item for $19.15 and $12.87. In the case of the first item, the person preparing the deposit information entered a "4" when a "9" was intended and in the case of the second item, the person preparing the deposit information entered a "7" when a "2" was intended. The first erroneously entered digit differs from the correct digit by -5, while the second erroneously entered digit differs from the correct digit by +5. The total of the items as actually deposited matches the total reflected in the deposit information, but the amount of each of the individual items does not match the deposit information which was entered. This sort of offsetting discrepancy may occur occasionally and if it can be detected, the information may be reported to the depositor to assist the depositor in resolving possible errors in his or her internal accounting. If offsetting discrepancies exist, the offsetting discrepancies are reported. The process then proceeds to step 611 and the deposit is posted. The process then proceeds to step 620. At step 620, when an item is returned, the deposit information in which the item is included is retrieved and the deposit information which was previously submitted reflecting the item is included in a report which is supplied to the depositor along with the item. The process then proceeds to step 622 and terminates.

Returning now to step 608, in the more likely event that no offsetting discrepancies exist, the process proceeds directly to step 612 and a report is prepared reflecting a deposit with no discrepancies. The process then proceeds to step 611.

Returning now to step 606, If a discrepancy exists between the actual total of the deposited items and the total reflected in the deposit information, the process proceeds to step 616 and the deposit information is examined in order to identify the item responsible for the discrepancy. The process then proceeds to step 618 and a report is prepared and issued to the depositor identifying the amount of the discrepancy. In addition, if the item responsible for the discrepancy has been identified, the amount of the item together with all other information submitted in preparing the deposit information is included in the report. The process then proceeds to step 611.

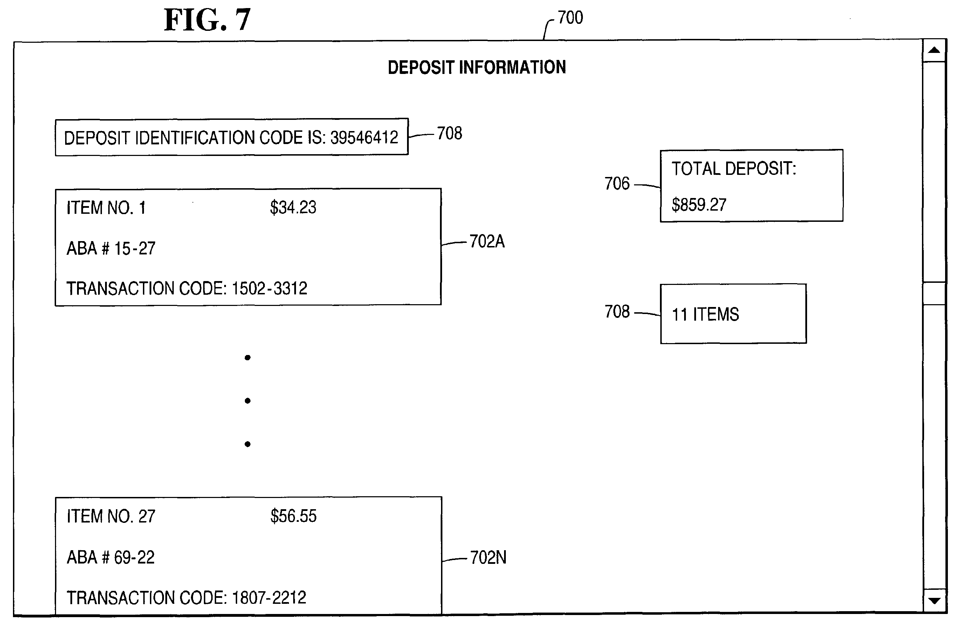

Fig. 7 illustrates a deposit information form 700 displaying details of a deposit which has previously been prepared and submitted using a depositor computer such as the computer 104A of Fig. 1. The deposit information form includes an item identification code 701 and item entries 702A...702N. Each of the item entries 702A. ..702N includes all details submitted for an item. The deposit information form 700 also includes a scroll bar 704 for scrolling up and down in the form 700 so that each of the item entries 702A...702N may be viewed as desired. The deposit information form 700 also includes a total deposit field 704 and a number of items field 706, so that the user can easily see the total amount of the deposit and the number of items making up the deposit. The deposit information form 700 further includes a deposit identification field 708 so that the deposit which is represented can be easily identified. When desired, the deposit information form may be retrieved for display on a computer such as the bank computer 102 or the depositor computer 104A, by entering a deposit identification code associated with the deposit. After the items have been deposited, images of the items will typically be available and can be retrieved if desired, along with the deposit information. Retrieval of deposit information is typically done when a deposit includes discrepancies. Upon entry of the deposit identification code, the deposit information form 700 is displayed, presenting the deposit information in an easily read format, sequenced in the order in which the deposited items were entered by the depositor. A bank employee can search through the deposit information form looking for irregularities and discrepancies without any need to examine a paper document. Moreover, the deposit information form 700 is typically stored in a central repository such as the database 106 of Fig. 1, and can be made accessible to any person with access to that database. Therefore, anyone with the responsibility of reconciling a particular deposit can be given access to the deposit information form 700 without any need to keep track of a physical document. Furthermore, if it is desired to use a data processing system to compare the deposit information submitted by the depositor against the actual deposit as reflected by the deposited items, the deposit information form 700 provides an electronically stored version of the deposit information, readily adapted for processing and analysis.

While the present invention is disclosed in the context of a presently preferred embodiment, it will be recognized that a wide variety of implementations may be employed by persons of ordinary skill in the art consistent with the above discussion and the claims which follow below. For example, various exemplary forms are shown here as being employed for receiving information from the depositor and displaying information for the depositor, but it will be recognized that numerous alternative forms may be designed and employed, such as forms allowing for entry or display of multiple items on a single page. To take another example, the depositor as shown here as providing the deposit identification code when submitting the items for which deposit information was previously provided. It will be recognized that alternative ways exist of associating the deposited items with the previously submitted deposit information. For example, each depositor is readily identifiable because of his or her account number, and submissions of deposit information are also identifiable to a depositor because they are associated with the depositor's account number. If a depositor makes only one deposit on a particular day, the deposited items are easily associated with the previously submitted deposit information whether or not the depositor submits the deposit identification code when depositing the items. This is because there is only one possible information submission for that depositor and for that day, with which the deposited items can be associated.

Modifications may be incorporated without departing from the scope of the present invention.

## Claims

1. A deposit preparation system, comprising:
a bank computer;
a database operative to receive and store information received from the bank computer and to retrieve and supply information to the bank computer;
a plurality of depositor computers operative to establish a connection with the bank computer, each depositor computer being able to receive deposit information from a depositor, the deposit information reflecting information about each of a plurality if items to be submitted for deposit, the depositor computers being operative to transmit the deposit information to the bank computer for storage in the database;
a deposit station for receiving a deposit comprising a plurality of deposited items and for associating the deposit with previously submitted deposit information; and
a processing center for processing a deposit comprising a plurality of deposited items, the processing center being operative to receive the deposit information and employ the deposit information to identify discrepancies between the deposit and the deposit information.

2. A deposit preparation system as claimed in claim 1 wherein the information about each of the plurality of items includes identifying information submitted by the depositor for use in identifying a transaction related to the item.

3. A deposit preparation system as claimed in claim 1 or claim 2 wherein the identifying information includes a transaction code submitted by the depositor.

4. A deposit preparation system as claimed in claim 3 wherein the bank computer issues a deposit information code upon submission of the deposit information, for use in retrieving the deposit information.

5. A deposit preparation system as claimed in any preceding claim, wherein the bank computer and the depositor computers communicate over the Internet.

6. A method of deposit preparation, comprising the steps of:
establishing a connection between a bank computer and a depositor computer;
receiving an item information entry for each of a plurality of items for temporary storage in the depositor computer; and
assembling the item information entries into deposit information; and
transmitting the deposit information to the bank computer.

7. A method as claimed in claim 6, wherein the step of receiving an item information entry for each of the plurality of items is followed by an optional step of editing a selected item entry.

8. A method as claimed in claim 6 or claim 7, wherein the optional step of editing a selected item entry is followed by an optional step of deleting a selected item entry.

9. A method as claimed in any of claims 6 to 8, wherein the step of assembling the item information entries into deposit information is followed by a step of displaying the deposit information on the depositor computer.

10. A method as claimed in claim 9 wherein the step of displaying the deposit information on the depositor computer includes selecting a display format for the deposit information.

11. A method as claimed in claim 10 wherein the step of displaying the deposit information on the depositor computer is followed by an optional step of printing the deposit information.
